# EUROPEAN PATENT APPLICATION

(11) **EP 4 549 304 A1**
(43) Date of publication of application: **07.05.2025**
(21) Application number: 24206612.4
(22) Date of filing: 15.10.2024
(51) Int. Cl.: B63B 1/04, B63B 1/10

(54) **OFFSHORE FLOATING WIND TURBINE PLATFORM OF SEMI SUBMERSIBLE TYPE WITH COLUMNS' CROSS-SECTION AREA EXPANDED UP TO WATER SURFACE**

(30) Priority: 01.11.2023 TW 112142042; 17.07.2024 TW 113126768
(71) Applicant: National Taiwan Ocean University, Keelung 20224 (TW)
(72) Inventor: KEHR, Young-Zehr, Keelung 20224 (TW); CHANG, Gwo-Ang, Keelung 20224 (TW)
(74) Representative: Becker, Eberhard

(57) **Abstract**

An offshore floating wind turbine platform (100, 200, 300, 400, 500) with columns' (110, 210, 310) cross-section expanded up toward water surface is used for a wind turbine (50) to be disposed thereon and floated on the sea. The offshore floating wind turbine platform (100, 200, 300, 400, 500) includes multiple columns (110, 210, 310) and a connection portion (120, 220). At least one of the columns (110, 210, 310) has an expansion section (112, 212, 312, 512). A horizontal cross-sectional area (A10) of the expansion section (112, 212, 312, 512) gradually increases upward. The wind turbine (50) is disposed on one of the columns (110, 210, 310). A design waterline of the offshore floating wind turbine platform (100, 200, 300, 400, 500) is located on the expansion section (112, 212, 312, 512). The connection portion (120, 220) connects the columns (110, 210, 310).

## Description

### BACKGROUND

### Technical Field

This disclosure relates to a wind turbine platform, and in particular to a semi-submersible offshore floating wind turbine platform.

### Description of Related Art

With the development of offshore wind turbines, the shallow waters suitable for the installation of fixed wind turbines are almost full of wind turbines. The development in deep water is bound to occur in the future; however, deeper waters are not suitable for the installation of fixed wind turbines, and need to be replaced by floating wind turbine platforms.

Due to the heavy weight and high center of gravity of the wind turbine, the wind turbine will generate a large thrust/drag during operation, and this thrust/drag is very high above the water surface, so it will cause a large heeling moment on the wind turbine platform, which will cause the wind turbine to generate a pitching motion and reduce the wind turbine's generating efficiency, and even lead to the overturning of the wind turbine platform. To solve these problems, it is necessary to increase the distance between the columns to increase the height of the metacenter as much as possible, and on the other hand, the draught depth of the platform should be deep and apply a large ballast to reduce the height of the center of gravity, so as to allow the platform to maintain a proper stability in waves. Taking a wind turbine platform with a design capacity of 15 MW as an example, its dimensions and structure weight are very large, e.g. 94.2m x 81.6m x 31m in length x width x height, and weighing more than 3,500 tons, which would make the construction of the platform costy and uneconomical.

### SUMMARY

The disclosure provides an offshore floating wind turbine platform, capable of reducing overall size and structure weight of the platform and reducing motions in waves for higher power generation efficiency as well as better availability and reliability.

The offshore floating wind turbine platform is used for a wind turbine to be disposed on thereon and floated on the sea. The offshore floating wind turbine platform includes multiple columns and a connection portion. At least one of the columns has an expansion section, which the horizontal cross-sectional area gradually increases upward. The wind turbine is disposed on one of the columns. A design waterline of the offshore floating wind turbine platform is located on the expansion sections. The connection portion connects the columns.

In an embodiment of the disclosure, an expansion angle of the expansion section is between 5 degrees and 80 degrees.

In an embodiment of the disclosure, an expansion angle of the expansion section is between 18.4 degrees and 60 degrees.

In an embodiment of the disclosure, the expansion section is tapered.

In an embodiment of the disclosure, the column having the expansion section further has an upper section and a lower section. The expansion section is connected between the upper section and the lower section. A horizontal cross-sectional area of the lower section is fixed.

In an embodiment of the disclosure, the design waterline of the offshore floating wind turbine platform is located at a level where the expansion section connects to the upper section.

In an embodiment of the disclosure, a central axis of the upper section overlaps a central axis of the lower section.

In an embodiment of the disclosure, a central axis of the upper section is parallel to a central axis of the lower section, and the central axis of the upper section is farther from a center of the offshore floating wind turbine platform than the central axis of the lower section.

In an embodiment of the disclosure, an offshore floating wind turbine platform further includes at least one buoyancy ring detachably sleeved outside the lower section and the expansion section.

In an embodiment of the disclosure, a column having the expansion section further has an upper section, the expansion section is connected between the upper section and the connection portion, and a horizontal cross-sectional area of the upper section is fixed.

In an embodiment of the disclosure, a design waterline of the offshore floating wind turbine platform is located at a level where the expansion section connects to the upper section.

In an embodiment of the disclosure, the offshore floating wind turbine platform further includes at least one damping plate, wherein the connection portion includes a bottom connection portion and a top connection portion, the bottom connection portion is connected to bottoms of the columns, the top connection portion is connected to tops of the columns, the damping plate extends outward from the bottom connection portion.

Based on the above, in the offshore floating wind turbine platform of the disclosure, the horizontal cross-sectional area of the expansion section of the column gradually increases upward, thus reducing the overall size and weight while maintaining a certain height of a metacenter.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate example embodiments of the disclosure and, together with the description, serve to explain the principles of the disclosure.
FIG. 1 is a schematic view of an offshore floating wind turbine platform according to an embodiment of the disclosure.
FIG. 2 is a schematic top view of an offshore floating wind turbine platform according to another embodiment of the disclosure.
FIG. 3 is a schematic side view of the offshore floating wind turbine platform in FIG. 2.
FIG. 4 is a schematic top view of an offshore floating wind turbine platform according to still another embodiment of the disclosure.
FIG. 5 is a schematic side view of the offshore floating wind turbine platform in FIG. 4.
FIG. 6 is a schematic side view of the offshore floating wind turbine platform in FIG. 4 from another direction.
FIG. 7 is a schematic view of an offshore floating wind turbine platform according to yet another embodiment of the disclosure.
FIG. 8 is a schematic view of an offshore floating wind turbine platform according to another embodiment of the disclosure.
FIG. 9 is a schematic view of an offshore floating wind turbine platform according to still another embodiment of the disclosure.
FIG. 10 is a schematic view of an offshore floating wind turbine platform according to yet another embodiment of the disclosure.
FIG. 11 is a schematic view of an offshore floating wind turbine platform according to a further embodiment of the disclosure.
FIG. 12 shows the relationship between up and down fluctuations and wave period for wave heading of 90 degrees for the offshore floating wind turbine platform of the comparative example and the embodiment of FIG. 8 to FIG. 11.
FIG. 13 shows the relationship between up and down fluctuations and wave period for wave heading of 180 degrees for the offshore floating wind turbine platform of the comparative example and the embodiment of FIG. 8 to FIG. 11.
FIG. 14 shows the relationship between roll and wave period for wave heading of 90 degrees for the offshore floating wind turbine platform of the comparative example and the embodiment of FIG. 8 to FIG. 11.
FIG. 15 shows the relationship between pitch and wave period for wave heading of 180 degrees for the offshore floating wind turbine platform of the comparative example and the embodiment of FIG. 8 to FIG. 11.
FIG. 16 is a schematic view of an offshore floating wind turbine platform according to another embodiment of the disclosure.

### DESCRIPTION OF THE EMBODIMENTS

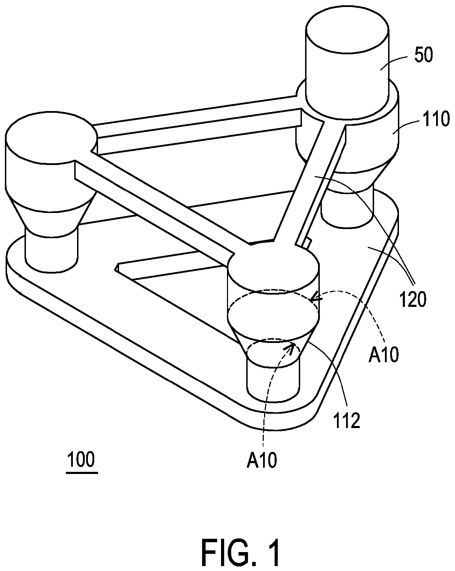

FIG. 1 is a schematic view of an offshore floating wind turbine platform according to an embodiment of the disclosure. Referring to FIG. 1, an offshore floating wind turbine platform 100 of this embodiment is used for a wind turbine 50 to be disposed thereon and floated on the sea. Herein, only a section of the lower half of a tower of the wind turbine 50 connected to the offshore floating wind turbine platform 100 is shown, omitting the remainder of the tower and the turbine blades and generator located at the top of the tower. The offshore floating wind turbine platform 100 includes multiple columns 110 and a connection portion 120. At least one of the columns 110 has an expansion section 112. In this embodiment, each of the columns 110 has an expansion section 112, but the disclosure is not limited thereto. A horizontal cross-sectional area A10 of the each of the expansion sections 112 gradually increases upward. Since the offshore floating wind turbine platform 100 of this embodiment is used to float on the sea, the term "upward" herein refers to "upward" when the offshore floating wind turbine platform 100 is floating on the sea. The horizontal cross-sectional area A10 represents an area obtained by sectioning the expansion section 112 with a cross-section parallel to the sea level. The wind turbine 50 is disposed on one of the columns 110. The connection portion 120 connects the columns 110.

In this embodiment, the horizontal cross-sectional area A10 of the expansion section 112 gradually increases upward. In other words, the cross-sectional area where the expansion section 112 of this embodiment is intersected with the sea level will be much larger than the cross-sectional area where a cylindrical column of the same volume is intersected with the sea level.

A distance from a metacenter to a center of buoyancy of the offshore floating wind turbine platform 100 in each direction is represented by a symbol BM. The metacenter is an important indicator for determining the stability of a floating body. A floating body is usually subjected to at least the effects of buoyancy and gravity. The point of action of gravity is the center of mass of the floating body, and the point of action of buoyancy is the center of buoyancy. The center of buoyancy is the center of the volume of the submerged part of the floating body. When the floating body rotates, the position of the center of mass never changes, but the center of buoyancy does. Find two perpendicular lines through the center of buoyancy when the floating body is in two different inclinations in the water, and the intersection of these two perpendicular lines is the metacenter.

BM=I/∇. I is the total area moment of inertia from each cross-sectional area of the offshore floating wind turbine platform 100 intersected with the sea level with respect to a neutral axis of the offshore floating wind turbine platform 100, i.e., the area moment of inertia of the horizontal cross-sectional area A10 of the expansion section 112 of the columns 110 with respect to the neutral axis of the offshore floating wind turbine platform 100. V is the total displaced volume of the offshore floating wind turbine platform 100.

Because the horizontal cross-sectional area A10 of the expansion section 112 is larger than that of a conventional cylindrical column, the area moment of inertia I of the offshore floating wind turbine platform 100 will be increased, which in turn increases the distance from the metacenter to the center of buoyancy (represented by the symbol BM), that is, raises the height of the metacenter. As the height of the metacenter increases, a distance between the center of gravity of the offshore floating turbine platform 100 and the metacenter (represented by a symbol GM) also increases. In this way, it is not necessary to apply a lot of ballasts to the offshore floating turbine platform 100 to lower the position of the center of gravity, and it is possible to make the total displaced volume V of the offshore floating turbine platform 100 decrease, which in turn increases the BM. In addition, since the BM may be substantially increased, the displaced distance between the each of the columns 110 may be reduced, and the size of the connection portion 120 connecting the each of the columns 110 may be reduced. Ultimately, the size of the entire offshore floating turbine platform 100 may be reduced, and the weight of the entire offshore floating turbine platform 100 may be significantly reduced. Thus, the offshore floating turbine platform 100 of this embodiment is less costly to manufacture hence more economical.

In various embodiments of the disclosure, an expansion angle of the each of the expansion sections is between 5 degrees and 80 degrees, for example, between 18.4 degrees and 60 degrees.

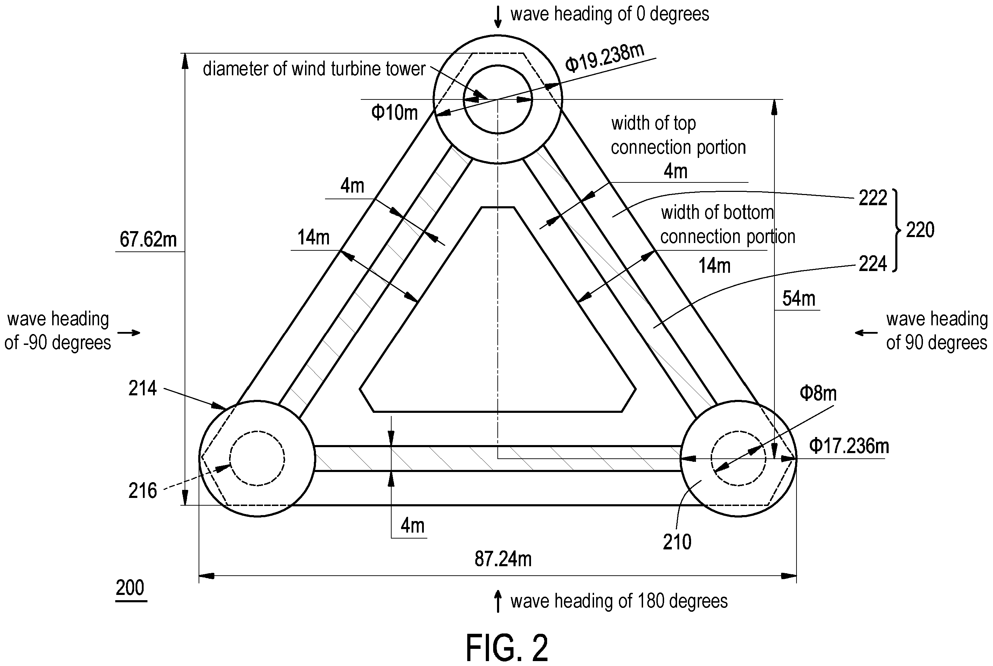

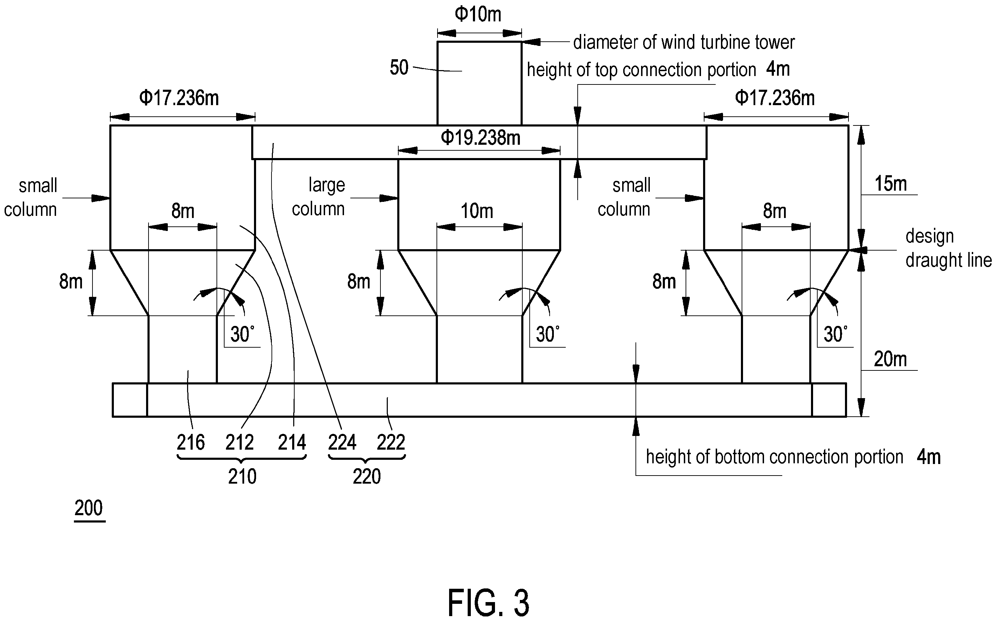

FIG. 2 is a schematic top view of an offshore floating wind turbine platform according to another embodiment of the disclosure. FIG. 3 is a schematic side view of the offshore floating wind turbine platform in FIG. 2. Referring to FIG. 2 and FIG. 3, in an offshore floating wind turbine platform 200 of this embodiment, a connection portion 220 includes a bottom connection portion 222 and a top connection portion 224. The bottom connection portion 222 is connected to the bottom of a column 210. The top connection portion 224 is connected to the top of the column 210. In this embodiment, the top connection portion 224 is composed of multiple box girders, and each of the girders connects two columns 210. The bottom connection portion 222 is generally in the shape of a polygonal plate with a rectangular cross-section, and the columns 210 are located at each corner of the polygon. The architecture of the connection portion 220 of this embodiment is only an example, and the disclosure is not limited thereto.

In the offshore floating wind turbine platform 200 of this embodiment, each expansion section 212 is tapered. That is, both sides of the vertical section of the expansion section 212 are straight lines, but the disclosure is not limited thereto. Each of the columns 210 further has an upper section 214 and a lower section 216. The expansion section 212 is connected between the upper section 214 and the lower section 216. The upper section 214 has a constant horizontal cross-sectional area, and the lower section 216 has a constant horizontal cross-sectional area. The structure of the column 210 in this embodiment is only an example, and the disclosure is not limited thereto. In addition, the number of the column 210 in this embodiment is three, and the appearance of the column 210 is, for example, cylindrical. However, the number of the column 210 may be more, and the appearance may also be polygonal columnar or other shapes. One of the three columns 210 in this embodiment is larger in size, and the wind turbine 50 is disposed on this larger column 210. However, the disclosure does not limit the size difference between the multiple columns 210.

In this embodiment, a central axis of the upper section 214 of the each of the columns 210 overlaps with a central axis of the lower section 216. That is, when viewed from above, center points of the upper section 214 and the lower section 216 overlap. In addition, the design waterline of the offshore floating wind turbine platform 200 is closely located at a level where the each of the expansion sections 212 connects to the corresponding upper section 214. Thus, ideally, each section of the offshore floating wind turbine platform 200 intersected with sea level would fall at the top of the expansion section 212, which is where the expansion section 212 has the largest horizontal cross-sectional area.

**Table I**

| | Comparative Example | Experimental Example 1 | Experimental Example 2 | Experimental Example 3 | Experimental Example 4 | Experimental Example 5 | Experimental Example 6 |
|---|---|---|---|---|---|---|---|
| distance between edges of two small columns (m) | 94.2 | 86 | 82.92 | 87.24 | 84.5 | 81.89 | 78.34 |
| height of triangle (m) | 81.6 | 66.26 | 63.96 | 67.62 | 66.5 | 63.2 | 60.671 |
| distance between centers of large and small columns (m) | 65.55 | 52.26 | 49.5 | 54 | 51.5 | 49 | 46 |
| height of upper edge of connection portion (deck) (m) | 35 | 35 | 35 | 35 | 35 | 35 | 35 |
| draught (m) | 20 | 20 | 20 | 20 | 20 | 20 | 20 |
| horizontal cross-sectional area of large/small columns (m^2) | 224.75 /181.49 | 314.16 /254.47 | 343.68 /281.12 | 290.67 /233.33 | 314.16 /254.47 | 320.47 /265.52 | 356.33 /292.55 |
| diameter of large/small columns of the lower section (m) | 16.9/15.2 | 10/8 | 10/8 | 10/8 | 12/10 | 10/8 | 10/8 |
| upper diameter of large/small columns (m) | 16.9/15.2 | 20/18 | 20.9/18.92 | 19.238 /17.236 | 20/18 | 20.2/18.39 | 21.3/19.3 |
| height of expansion section (m) | - | 15 | 15 | 8 | 4 | 3 | 1 |
| expansion angle (°) | 0 | 18.4 | 20 | 30 | 45 | 60 | 80 |
| width of bottom/top connection portion | 14/4 | 14/4 | 14/4 | 14/4 | 14/4 | 14/4 | 14/4 |
| weight of wind turbine (tons) | 1942 | 1942 | 1942 | 1942 | 1942 | 1942 | 1942 |
| weight of platform itself (tons) | 3673.76 | 3069.56 | 3015.35 | 3033.01 | 2972.04 | 2893.01 | 2844.6 |
| weight of platform itself plus ballast (tons) | 22162.19 | 16370.19 | 16345.34 | 14434.6 | 14404.17 | 12304.64 | 11129.56 |
| height of center of gravity KG (m) | 17.16 | 23.59 | 23.64 | 26.16 | 26.23 | 30 | 32.81 |
| height of center of buoyancy KB (m) | 6.35 | 7.34 | 7.78 | 6.29 | 6.27 | 5.65 | 5.18 |
| GMx (m) | 15.81 | 20.65 | 20.5 | 20.66 | 20.18 | 20.53 | 20.09 |
| GMy (m) | 17.48 | 20.08 | 20.32 | 20.43 | 20.17 | 20.2 | 20.64 |
| Ix (m^4) | 575580.1 | 589279.4 | 579859.7 | 570820.5 | 564027.8 | 538632.3 | 518143.6 |
| BMx (m) | 26.62 | 36.9 | 36.36 | 40.53 | 40.14 | 44.87 | 47.72 |
| Iy(m^4) | 611602 | 580129.2 | 576918.5 | 567480.4 | 563924.9 | 534712.1 | 524046.4 |
| BMy (m) | 28.29 | 36.32 | 36.18 | 40.3 | 40.13 | 44.54 | 48.26 |

Table I above presents the simulation calculation results of Experimental Example 1 to Experimental Example 6 using the architecture of the embodiments shown in FIG. 2 and FIG. 3, as well as the comparative example in which the column does not have an expansion section. In Experimental Example 1 to Experimental Example 6, the expansion angles of the expansion section are 18.4 degrees, 20 degrees, 30 degrees, 45 degrees, 60 degrees, and 80 degrees in order. On the other hand, the column in the comparative example does not have an expansion section, so the height of the expansion section is 0, and the expansion angle is also 0. Among them, the GMx and GMy of the platform of the comparative example are 15.81m and 17.48m respectively. The platform of the experimental example is set to maintain its GMx and GMy above 20m to ensure that the stability of the platform of the experimental example is much higher than the comparative example, and other parameters are adjusted accordingly. In order to maintain the GMx and GMy of the experimental platform slightly higher than 20m, the position of the bottom of the expansion section is gradually closer to the sea level with the increase of the expansion angle, and the horizontal cross-sectional area at the intersection of the expansion section to the sea level is also maintained within 350m^2 as far as possible.

The horizontal cross-sectional area at the intersection of the expansion section of the large column in Experimental Example 1 to the sea level is 314.2m^2, which is significantly increased compared to the horizontal cross-sectional area of 224.8m^2 in the Comparative Example. The horizontal cross-sectional area at the intersection of the expansion section of the small column to the sea level is 254.5m^2, which is also significantly increased compared to the horizontal cross-sectional area of 181.5m^2 in the comparative example. Thus, compared with the comparative example, the position of the metacenter of the platform in Experimental Example 1 increases significantly. At the same time, the GMx and GMy of the platform of the comparative example are 15.77m and 17.42m respectively, while the GMx and GMy of the platform of the experimental example 1 increases to 20.65m and 20.08m respectively. Since the stability of Experimental Example 1 is significantly increased compared to the comparative example, the weight of ballast can be significantly reduced from 16,739 tons in the comparative example to 11,358.6 tons. At the same time, the overall size can also be significantly reduced. The distance between the edges of the two small columns is reduced from 94.2m in the comparative example to 86.0m in the experimental example 1, and the height of the triangle is reduced from 81.6m in the comparative example to 66.3m in the experimental example 1. The weight of the platform itself can be significantly reduced from 3673.8 tons in the comparative example to 3069.6 tons in the experimental example 1. The weight of the platform plus the ballast is reduced from 22162.2 tons in the comparative example to 16370.2 tons in the experimental example 1. Importantly, in addition to the above advantages, the stability of the platform of Experimental Example 1 is significantly higher than that of the platform of comparative example in either the x or y direction. That is, there is still room for reduction in the size of the platform in Experimental Example 1. Moreover, because the GM of Experiment 1 is larger, the heeling moment generated by the thrust of the wind turbine during power generation may be easily offset by the restoring moment, so that the pitching angle of the wind turbine may be smaller, thereby improving the power generation efficiency. At the same time, it can be operated in high wind and wave conditions without the need of an active balancing cabinet with larger capacity.

The expansion angle of Experimental Example 2 is 20 degrees, and the height of the expansion section is also 15m. Therefore, the horizontal cross-sectional areas at the intersection of the expansion section of the large column and the small column to the sea level slightly increase to 343.7 m^2 and 281.1 m^2 respectively. The GMx and GMy are 20.50m and 20.32m respectively, which are still much higher than the comparative example. In addition, the distance between the edges of the two small columns continues to drop to 82.92m, while the height of the triangle drops to 63.96m, and the weight of the platform itself drops to 3015.4 tons.

The expansion angle of Experimental Example 3 is 30 degrees, and the height of the expansion section is 8m. The horizontal cross-sectional areas at the intersection of the expansion section of the large column and the small column to the sea level are reduced to 290.7m^2 and 233.3m^2 respectively. The lower section of the large column maintains a diameter of 10m, while the lower section of the small column maintains a diameter of 8m. Since the horizontal cross-sectional area is slightly reduced, the size of the platform must be slightly increased. The distance between the edges of the two small columns increases to 87.2m, while the height of the triangle increases to 67.62m, and the weight of the platform itself increases slightly to 3033.0 tons, while GMx and GMy remained approximately the same as Experimental Example 2. It can be seen that the size of the horizontal cross-sectional area is critical to the performance of the platform, and the weight of the platform itself is only a slight increase over the experimental example 2 because the height of its expansion section is 8m instead of 15m. If the height of the expansion section is 10m or 12m, the horizontal cross-sectional area will be increased, which will significantly increase the stability and reduce the size and weight of the platform.

The difference between Experimental Example 4 and Comparative Example is that the height of the expansion section is 4m, the expansion angle is 45 degrees, the diameter of the upper section of the large column is 20m, the diameter of the upper section of the small column is 18m, the diameter of the lower section of the large column remains 12m, and the diameter of the lower section of the small column is maintained at 10m. At this time, the size of the platform continues to decrease, the distance between the edges of the two small columns drops to 84.5m, and the height of the triangle drops to 66.5m. The horizontal cross-sectional areas at the intersection of the expansion section of the large column and the small column to the sea level are 314.2m^2 and 254.5m^2 respectively. The weight of the platform itself is reduced to 2972.0 tons, while GMx and GMy remain similar to Experimental Example 3.

The height of the expansion section in Experimental Example 5 is 3m, and the expansion angle is 60 degrees. The diameter of the upper section of the large column is 20.2m, while the diameter of the lower section of the large column is 10m. The horizontal cross-sectional area at the intersection of the expansion section of the large column to the sea level is 320.5m^2. The diameter of the upper section of the small column is 18.4m, while the diameter of the lower section of the small column is 8m. The horizontal cross-sectional area at the intersection of the expansion section of the small column to the sea level is 265.5m^2. At this time, the distance between the edges of the two small columns is reduced to 81.89m, and the height of the triangle is reduced to 63.20m, while both GMx and GMy remain similar to Experimental Example 4. The weight of the platform itself in Experimental Example 5 continues to decrease from 2972.0 tons in Experimental Example 4 to 2893.0 tons, and the ballast weight also drops significantly at this time.

The height of the expansion section in Experimental Example 6 is 1m, and the expansion angle is 80 degrees. Although the weight of the platform may still be reduced, the expansion angle has reached its limit. From the known shipbuilding knowledge about the impact pressure caused by waves on the bottom of the ship, it can be known that the impact pressure is mainly affected by the angle between the bottom of the ship and the water surface. The maximum local pressure on the bottom of the ship calculated by Wagner theory shows that, as long as the β angle is less than 10 degrees, which is equivalent to the expansion angle in the disclosure being greater than 80 degrees, the pressure on the bottom plate of the ship will rise sharply. Therefore, the expansion angle should not be greater than 80 degrees.

As can be seen from Table 1, the size of the platforms in Experiment 1 to Experiment 6 is much smaller than that of the Comparative Example, and the weight of the platforms is much less, and there is less ballast to be loaded on the platforms, which reduces the cost of the platforms as well as the difficulty of the platforms compared to the Comparative Example, while maintaining a higher stability criterion, i.e., higher GMx and GMy. From the above analysis, it can be seen that as long as the horizontal cross-sectional area of the column near the sea level can be increased, the metacenter of the platform can be increased, which in turn can improve the stability of the system and reduce the weight of the platform.

In the above experimental examples, the central axis of the upper section of the column overlaps with the central axis of the lower section. On the other hand, the distance between the central axis of the expansion section and the other columns is fixed in the height direction. In other embodiments of the disclosure, the central axis of the upper section of each column can be parallel to and kept apart from the central axis of the lower section. For example, the central axis of the upper section of each column can be farther from the center of the offshore floating wind turbine platform than the central axis of the lower section.

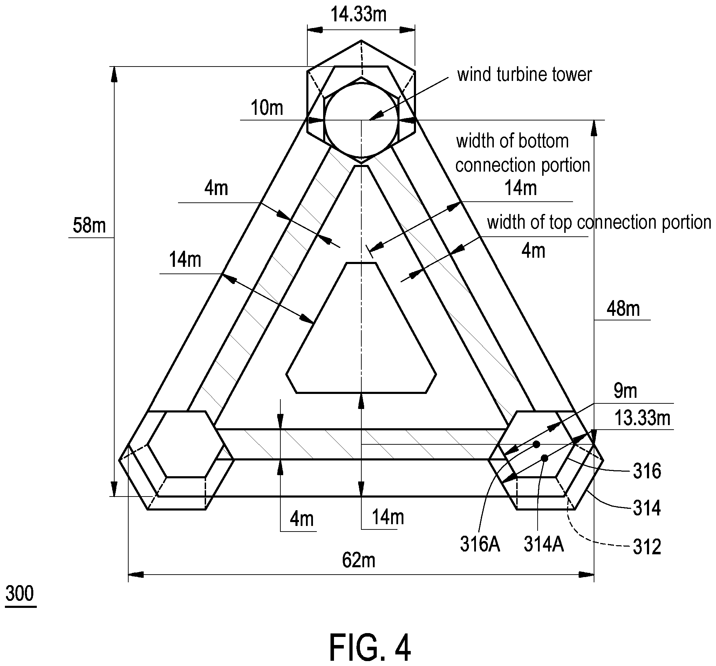

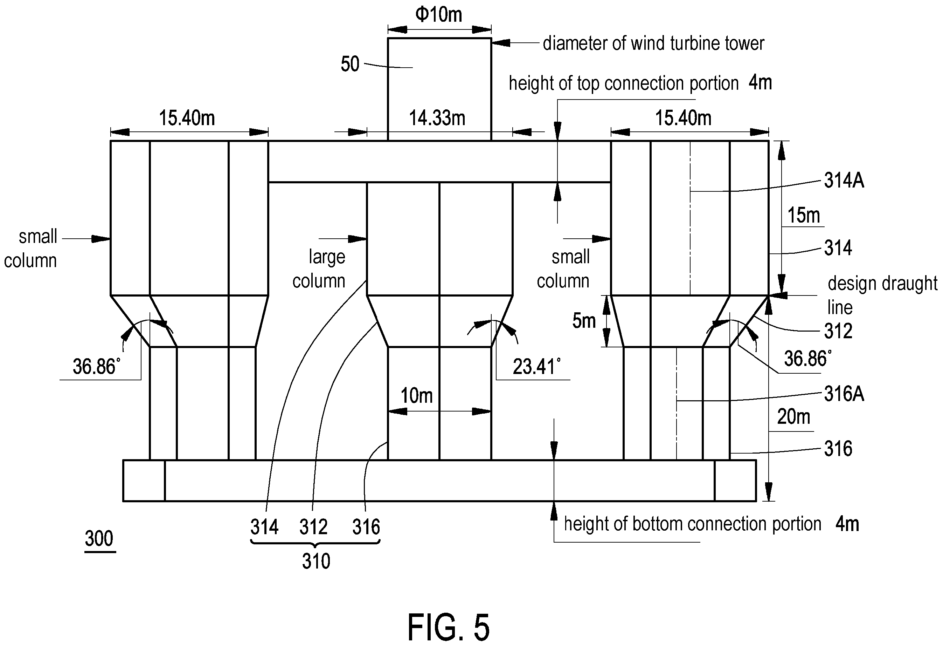

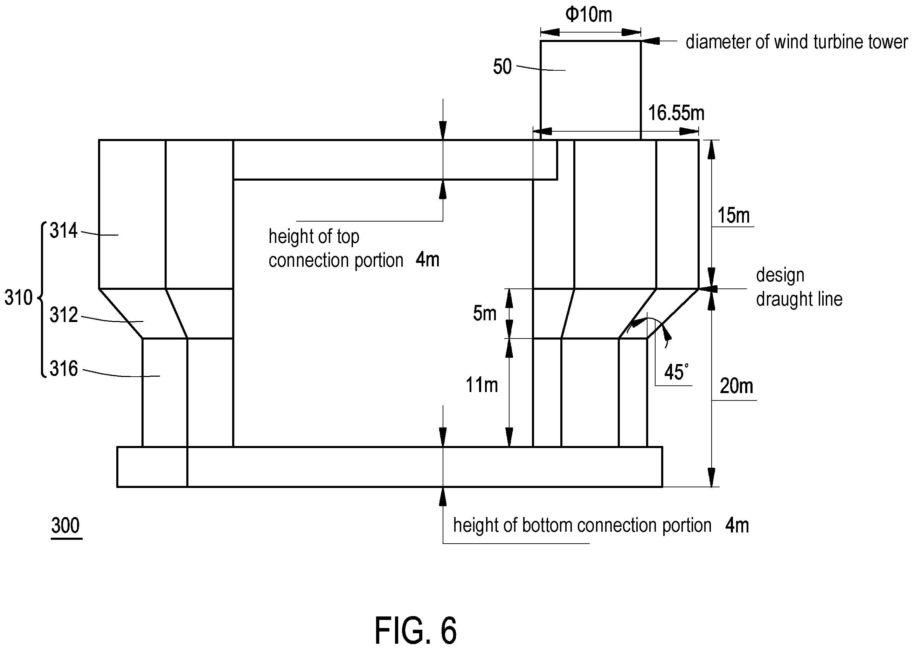

FIG. 4 is a schematic top view of an offshore floating wind turbine platform according to still another embodiment of the disclosure. FIG. 5 is a schematic side view of the offshore floating wind turbine platform in FIG. 4, specifically when viewed from the bottom of FIG. 4 looking upwards. FIG. 6 is a schematic side view of the offshore floating wind turbine platform in FIG. 4 from another direction, specifically when viewed from the right side of FIG.4 to the left.

Referring to FIG. 4 to FIG. 6, an offshore floating wind turbine platform 300 of this embodiment is roughly similar to the offshore floating wind turbine platform 200 of FIG. 2. The difference is that a column 310 is in the shape of a hexagonal column, and a central axis 314A of an upper section 314 of the column 310 and a central axis 316A of a lower section 316 is parallel and spaced apart, that is, an expansion section 312 is asymmetrical. Specifically, the expansion section 312 does not extend outward at the same expansion angle from each of its bottom edges. The expansion section 312 has an expansion angle of 0 at the edge of the side of its bottom surface proximate to the center of the offshore floating wind turbine platform 300, i.e., the expansion section 312 is substantially vertically upward at the side proximate to the center of the offshore floating wind turbine platform 300. The expansion section 312 extends at an expansion angle greater than 0 only at an edge on a side of its bottom surface that is away from the center of the offshore floating wind turbine platform 300, and thus has an outwardly sloping sidewall.

In this embodiment, the central axis 314A of the upper section 314 of each column 310 is farther away from a center of the offshore floating wind turbine platform 300 than the central axis 316A of the lower section 316. That is, the distance between the central axis of the expansion section 312 and the other columns 310 increases in the height direction toward the top. In other words, as the horizontal cross-sectional area of the expansion section 312 gradually increases in the upward direction, the center of the horizontal cross-sectional area of the expansion section 312 also moves outwardly. The term of "outward" herein refers that the higher the horizontal cross-section of the expansion section 312 is, the farther the center of the section is from the central axis of the entire offshore floating wind turbine platform 200. In this embodiment, because the horizontal cross-sectional area of the column 310 near the sea level is farther away from the overall center axis, and the area moments of inertia Ix and Iy in the x and y directions are proportional to the square of the distance, the area moments of inertia Ix and Iy will obviously increase, which will in turn increase the BMx and BMy, and ultimately increase the GMx and GMy, which will further improve the stability of the offshore floating wind turbine platform 300, and reduce the weight and the overall size of the offshore floating wind turbine platform 300. Additionally, when the expansion angle of the column 310 near the center of the offshore floating wind turbine platform 300 is small or even non-existent, the mutual interference of the waves in the inner water between the column 310 while the offshore floating wind turbine platform 300 is moving in the waves can be reduced.

**Table II**

| | Comparative Example | Experimental Example 7 | Experimental Example 8 | Experimental Example 9 | Experimental Example 10 | Experimental Example 11 | Experimental Example 12 |
|---|---|---|---|---|---|---|---|
| distance between edges of two small columns (m) | 94.2 | 76 | 72 | 65 | 62 | 58.5 | 58.5 |
| height of triangle (m) | 81.6 | 68.33 | 65.22 | 60 | 58 | 55.39 | 55.39 |
| distance between centers of large and small columns (m) | 65.55 | 55 | 53 | 50 | 48 | 46.5 | 46.5 |
| height of upper edge of connection portion (deck) (m) | 35 | 35 | 35 | 35 | 35 | 35 | 35 |
| draught (m) | 20 | 20 | 20 | 20 | 20 | 20 | 20 |
| horizontal cross-sectional area of large/small columns (m^2) | 224.75 /181.49 | 297.52 /253.21 | 290.91 /250.56 | 286.82 /253.65 | 299.97 /266.0 | 296.74 /266.52 | 294.54 /264.44 |
| base diameter of large/small columns of the lower section (m) | 16.9/15.2 | 13.3/12 | 12.2/11 | 10/9 | 10/9 | 9/8 | 9/8 |
| height of expansion section (m) | - | 15 | 9 | 8 | 5 | 3 | 1 |
| expansion angle (°) | 0 | 10 | 20 | 30 | 45 | 60 | 80 |
| width of bottom/top connection portion | 14/4 | 14/4 | 14/4 | 14/4 | 14/4 | 14/4 | 14/4 |
| weight of wind turbine (tons) | 1942 | 1942 | 1942 | 1942 | 1942 | 1942 | 1942 |
| weight of platform itself (tons) | 3673.76 | 3539.86 | 3411.76 | 3250.3 | 3173.91 | 3089.51 | 3094.21 |
| weight of platform itself plus ballast (tons) | 22162.19 | 20478.19 | 18156.27 | 15809.36 | 14577.06 | 12961.97 | 12224.6 |
| height of center of gravity KG (m) | 17.16 | 18.52 | 20.47 | 23.14 | 24.9 | 27.72 | 29.3 |
| height of center of buoyancy KB (m) | 6.35 | 7.38 | 7.06 | 6.88 | 6.58 | 5.99 | 5.23 |
| GMx (m) | 15.81 | 20.29 | 20.08 | 20.51 | 20.63 | 20.82 | 20.56 |
| GMy (m) | 17.48 | 20.44 | 20.47 | 20.3 | 20.69 | 20.56 | 20.35 |
| Ix (m^4) | 575580.1 | 629047.9 | 593085.3 | 567070.8 | 553879.2 | 538099.9 | 532206.2 |
| BMx (m) | 26.62 | 31.49 | 33.48 | 36.77 | 38.95 | 42.55 | 44.62 |
| Iy(m^4) | 611602 | 630937.2 | 600143.5 | 563931.3 | 554849.9 | 534696.9 | 529700.5 |
| BMy (m) | 28.29 | 31.58 | 33.88 | 36.56 | 39.01 | 42.28 | 44.41 |

Table II above presents the simulation calculation results of Experimental Examples 7 to Experimental Examples 12 using the architecture of the embodiments shown in FIG. 4 to FIG. 6 and a comparative example in which the column does not have an expansion section. In Experimental Example 7 to Experimental Example 12, the expansion angles of the expansion section are 10 degrees, 20 degrees, 30 degrees, 45 degrees, 60 degrees, and 80 degrees in order. The comparative example in Table 1 is the same as that in Table 2. The platform of the experimental example is still set to maintain its GMx and GMy above 20m to ensure that the stability of the platform of the experimental example is much higher than that of the comparative example, and other parameters are adjusted accordingly. In order to maintain the GMx and GMy of the experimental platform slightly higher than 20m, the position of the bottom of the expansion section gradually approaches the sea level as the expansion angle increases.

The height of the expansion section in Experimental Example 7 is 15m, the expansion angle is 10 degrees, and the diameters of the lower sections of the large column and small column are 13.3m and 12m respectively. Although the horizontal cross-sectional area at the intersection of the expansion section to the sea level has been greatly increased compared to the comparative example, since the height of the expansion section is 15m, it is difficult to significantly reduce the weight of the column under the water surface. Thus, while maintaining a GM of 20m or more, the weight of the platform itself is only reduced from the comparative example of 3,673.8 tons to 3,539.9 tons, although the size of the platform has been significantly reduced.

The height of the expansion section in Experimental Example 8 is 9m, the expansion angle is 20, and the diameters of the lower sections of the large column and small column are 12.2m and 11.0m respectively. The size of the platform in Experimental Example 8 has been significantly reduced, and the weight of the platform itself has dropped to 3411.8 tons. The contribution to the reduction in the weight of the platform itself mainly comes from the reduction in platform size and the significant reduction in the diameter of the lower section of the column.

The height of the expansion section in Experimental Example 9 is 8m, and the expansion angle is 30 degrees. In order to keep GMx and GMy slightly larger than 20m, the sizes of the three columns can be continuously reduced. The diameters of the lower sections of the large column and small column can be 10m and 9m respectively. Although the horizontal cross-sectional area at the intersection of the expansion section of Experimental Example 9 to the sea level is similar to that of Experimental Example 8, the BMx and BMy of Experimental Example 9 are significantly larger than those of Experimental Example 8 because the total displaced volume of the platform is significantly reduced. Although the KG of Experimental Example 9 increases, GMx and GMy are still maintained within a reasonable range. The weight of the platform itself can be reduced to 3250 tons, which fully demonstrates the importance of increasing the expansion angle in reducing the weight of the platform itself.

The height of the expansion section in Experimental Example 10 is 5m, and the expansion angle is 45 degrees. The size of the three columns can be continuously reduced. Since the horizontal cross-sectional area at the intersection of the expansion section to the sea level slightly increases and the total displaced volume decreases, the BMx and BMy of Experiment Example 10 continue to increase to offset the effect of the increase in KG and maintain the appropriate GMx and GMy, and the weight of the platform itself decreases to 3,173.90 tons due to the reduction in size.

The expansion angles of Experimental Example 11 and Experimental Example 12 are 60 degrees and 80 degrees respectively. The weight of the platform itself continues to decrease but the extent is limited.

**Table III**

| | Experimental Example 10 | Experimental Example 13 | Experimental Example 14 |
|---|---|---|---|
| distance between edges of two small columns (m) | 62 | 43 | 28 |
| height of triangle (m) | 58 | 44.9 | 32 |
| distance between centers of large and small columns (m) | 48 | 36 | 37.6 |
| height of upper edge of connection portion (deck) (m) | 35 | 35 | 35 |
| draught (m) | 20 | 20 | 20 |
| horizontal cross-sectional area of large/small columns (m^2) | 299.97 /266.0 | 391.45 /356.50 | 397.53 /375.0 |
| lower diameter of large/small columns (m) | 10/9 | 9/8 | 5.6/5 |
| height of expansion section (m) | 5 | 7.5 | 10 |
| expansion angle (°) | 45 | 45 | 45 |
| width of bottom/top connection portion | 14/4 | 14/4 | 14/4 |
| weight of wind turbine (tons) | 1942 | 1942 | 1942 |
| weight of platform itself (tons) | 3173.91 | 2852.05 | 2712.35 |
| weight of platform itself plus ballast (tons) | 14577.06 | 12989.46 | 12122.81 |
| KG (m) | 24.9 | 27.7 | 29.56 |
| KB (m) | 6.58 | 8.73 | 9.71 |
| GMx (m) | 20.63 | 20.14 | 21.81 |
| GMy (m) | 20.69 | 20.66 | 20.5 |
| Ix (m^4) | 553879.2 | 495672.3 | 492697.5 |
| BMx (m) | 38.95 | 39.11 | 41.66 |
| Iy(m^4) | 554849.9 | 502179.3 | 480742,63 |
| BMy (m) | 39.01 | 39.63 | 40.65 |

Table III shows experimental examples of asymmetric expansion with an expansion angle of 45 degrees. The Experimental Example 10 in Table 2 is the same as that in Table III, and the heights of the expansion sections of Experimental Examples 10, 13 and 14 are 5m, 7.5m, and 10m respectively. Although the size of the platform can be greatly reduced, the horizontal cross-sectional area at the intersection of the expansion section to the sea level is also greatly increased, so appropriate GMx and GMy can be maintained, and the weight of the platforms in Experimental Examples 13 and 14 can be further significantly reduced to 2852.0 tons and 2712.4 tons respectively. It can be seen that the higher the height of the expansion section, the larger the horizontal cross-sectional area at the intersection of the expansion section to the sea level can be obtained, thus obtaining the above advantages, and this method of operation is also applicable to symmetrically extended columns.

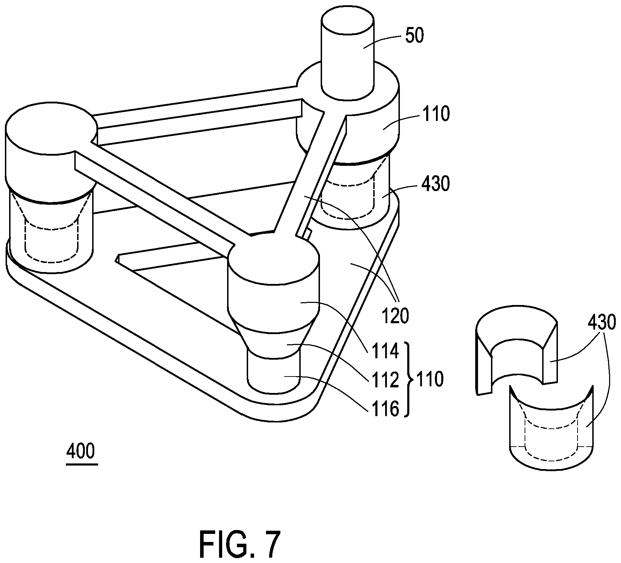

FIG. 7 is a schematic view of an offshore floating wind turbine platform according to yet another embodiment of the disclosure. Referring to FIG. 7, an offshore floating wind turbine platform 400 of this embodiment is substantially the same as the offshore floating wind turbine platform 100 of FIG. 1. Each column 110 has an expansion section 112, an upper section 114, and a lower section 116. The difference is that the offshore floating wind turbine platform 400 of this embodiment further includes multiple buoyancy rings 430. Each of the buoyancy rings 430 is detachably sleeved outside the corresponding lower section 116 and also outside the corresponding expansion section 112. After the offshore floating wind turbine platform 400 of this embodiment is to be launched and towed offshore for installation after production is completed at the shore. In the process of towing to the sea, because the draught is limited by the shore or the harbor, it is not possible to add too much ballast to the offshore floating turbine platform 400, coupled with the fact that the cross-sectional area of the waterline of the offshore floating turbine platform 400 is smaller when the draught is shallower, it is easy to have a situation in which the distance (GM) between the center of gravity and the metacenter is insufficient, thus making the stability of the platform relatively low.

However, in this embodiment, the buoyancy ring 430 is installed outside the lower section 116 and the expansion section 112, so that sufficient cross-sectional area may be provided at the waterline, and the stability may be greatly improved. The buoyancy ring 430 may be hollow. The shape of the buoyancy ring 430 at inner side corresponds to the shape of the lower section 116 and the expansion section 112. The inner diameter of the buoyancy ring 430 corresponds to the outer diameter of the lower section 116 and the expansion section 112, and the size of the outer diameter of the buoyancy ring 430 depends on stability requirements. Generally speaking, as long as the outer diameter of the buoyancy ring 430 is greater than 50% of the outer diameter of the lower section 116, sufficient cross-sectional area may be provided and the stability may be greatly improved. The buoyancy ring 430 of this embodiment may be composed of two semicircular tubular bodies for easy assembly to the lower section 116 and the expansion section 112, and is also convenient to disassemble from the lower section 116 and the expansion section 112. When the offshore floating wind turbine platform 400 is towed to deep water offshore, and then ballasted with water so that the draught of the offshore floating wind turbine platform 400 reaches the design waterline, then the buoyancy ring 430 may be disassembled and recovered for the next offshore floating wind turbine platform 400 to use.

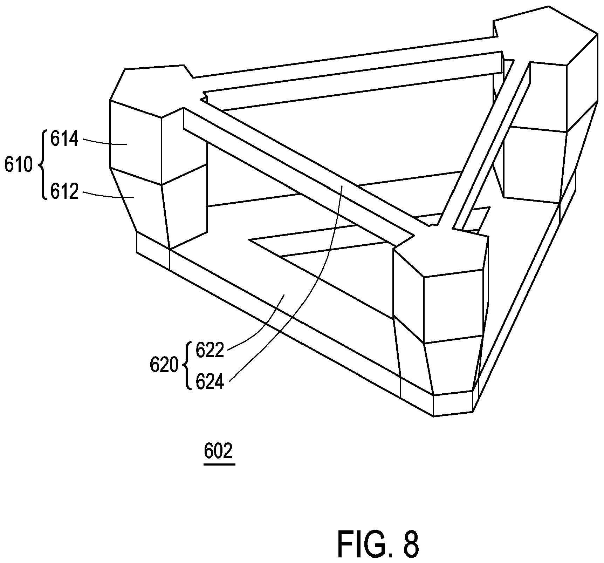

FIG. 8 is a schematic view of an offshore floating wind turbine platform according to another embodiment of the disclosure. Referring to FIG. 8, an offshore floating wind turbine platform 602 of this embodiment is similar to the offshore floating wind turbine platform 200 of FIG. 2. The main difference is that a column 610 only includes an expansion section 612 and an upper section 614, but the column 610 does not include the lower section. Similar to the connection portion 220 shown in FIG. 3, the connection portion 620 includes a bottom connection portion 622 and a top connection portion 624. The bottom of the expansion section 612 is directly connected to a bottom connection portion 622. Because the horizontal cross-sectional area of the column 610 starts to expand from the bottom, so as long as the expansion angle is small, a large horizontal cross-sectional area close to the sea level can be obtained, and a large distance GM between the center of gravity and the metacenter can be achieved. In addition, the column 610 has a pentagonal column shape, but is not limited thereto. In this embodiment, the three surfaces of the expansion section 612 away from the central axis of the entire offshore floating wind turbine platform 602 expand outward at an angle of 10 degrees, while the two surfaces of the expansion section 612 close to the central axis have no expansion angle, that is, they are vertical. Therefore, the horizontal section of the expansion section 612 at sea level can be farther away from the central axis, and can achieve a larger distance BM from the metacenter to the center of buoyancy. Here, the embodiment in FIG. 8 is set as Experimental Example 15.

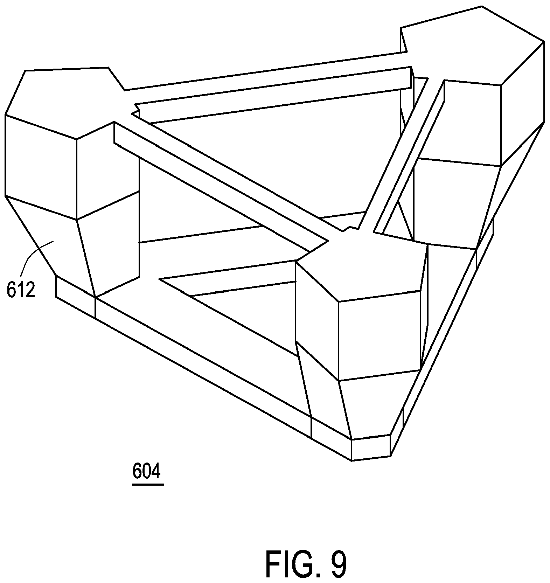

FIG. 9 is a schematic view of an offshore floating wind turbine platform according to still another embodiment of the disclosure. Referring to FIG. 9, an offshore floating wind turbine platform 604 of this embodiment is roughly similar to the offshore floating wind turbine platform 602 of FIG. 8. The main difference is that the three surfaces of the expansion section 612 away from the central axis of the entire offshore floating wind turbine platform 604 expand outward at an angle of 15 degrees. Here, the embodiment in FIG. 9 is set as Experimental Example 16.

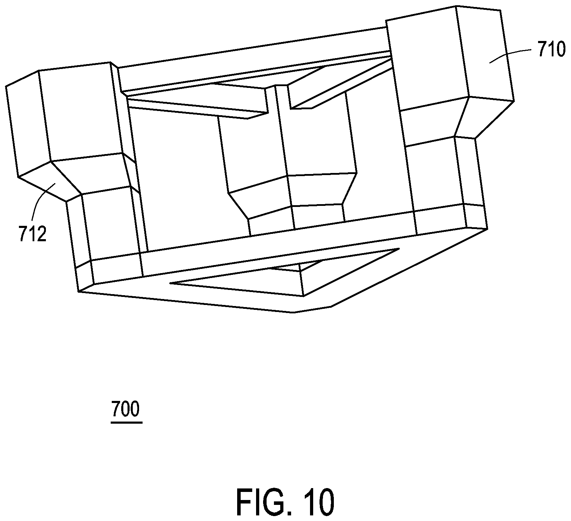

FIG. 10 is a schematic view of an offshore floating wind turbine platform according to yet another embodiment of the disclosure. Referring to FIG. 10, an offshore floating wind turbine platform 700 of this embodiment is roughly similar to the offshore floating wind turbine platform 200 of FIG. 2. The main difference is that a column 710 is in the shape of a pentagonal column. In this embodiment, the three surfaces of an expansion section 712 away from the central axis of the entire offshore floating wind turbine platform 700 expand outward at an angle of 45 degrees, while the two surfaces of the expansion section 712 close to the central axis have no expansion angle, that is, they are vertical. Here, the embodiment in FIG. 10 is set as Experimental Example 17.

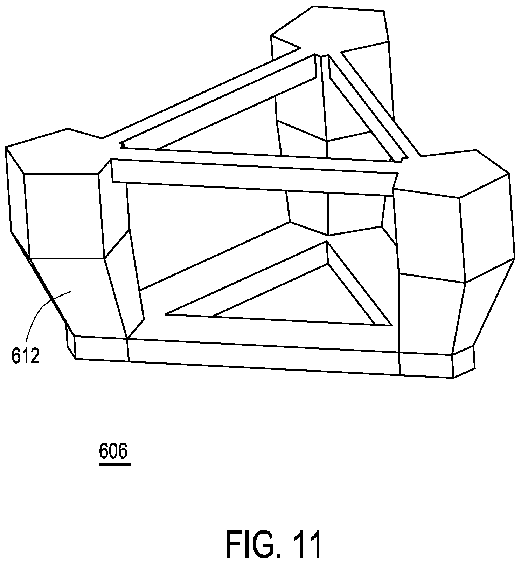

FIG. 11 is a schematic view of an offshore floating wind turbine platform according to a further embodiment of the disclosure. Referring to FIG. 11, an offshore floating wind turbine platform 606 of this embodiment is roughly similar to the offshore floating wind turbine platform 602 of FIG. 8. The main difference is that the three surfaces of the expansion section 612 away from the central axis of the entire offshore floating wind turbine platform 602 expand outward at an angle of 18 degrees, while the two faces of the expansion section 612 close to the central axis expand outward at an angle of 5 degrees. Here, the embodiment of FIG. 11 is set as Experimental Example 18.

**Table IV**

| | Comparative Example | Experimental Example 15 | Experimental Example 16 | Experimental Example 17 | Experimental Example 18 |
|---|---|---|---|---|---|
| distance between edges of two small columns (m) | 94.2 | 85.6 | 73.6 | 77 | 77.2 |
| height of triangle (m) | 81.6 | 72.6 | 64.9 | 66.3 | 66.5 |
| distance between centers of large and small columns (m) | 65.55 | 56.7 | 47 | 47 | 47 |
| height of upper edge of connection portion (deck) (m) | 35 | 35 | 35 | 35 | 35 |
| draught (m) | 20 | 20 | 20 | 20 | 20 |
| horizontal cross-sectional area of large/small columns (m^2) | 224.75 /181.49 | 224.4 /190.4 | 286.3 /251.9 | 290.76 /247.75 | 239.6 /200.7 |
| base diameter of large/small columns of the lower section (m) | 16.9/15.29 | 8.6/7.7 | 8.6/7.8 | 8/7 | 8/7 |
| height of expansion section (m) | - | 16 | 16 | 5 | 16 |
| expansion angle (°) | - | 10 | 15 | 45 | (outer edge)18 /(inner edge)5 |
| width of bottom/top connection portion | 14/4 | 12/4 | 10/4 | 10/4 | 10/4 |
| weight of wind turbine (tons) | 1942 | 1942 | 1942 | 1942 | 1942 |
| weight of platform itself (tons) | 3673.6 | 3624.50 | 2948.95 | 2893.67 | 2956.18 |
| weight of platform itself plus ballast (tons) | 22162.19 | 16765.82 | 15471.15 | 13026.87 | 14835.46 |
| KG (m) | 17.16 | 20.54 | 22.59 | 26.51 | 23.57 |
| KB (m) | 6.35 | 6.85 | 8.44 | 8.44 | 8.57 |
| GMx (m) | 15.81 | 17.00 | 18.02 | 18.42 | 16.86 |
| GMy (m) | 17.48 | 17.82 | 18.58 | 19.55 | 17.44 |
| Ix (m^4) | 575580.1 | 501338.99 | 485578.11 | 475422.47 | 466099.69 |
| BMx (m) | 26.62 | 30.65 | 32.17 | 37.41 | 32.20 |
| Iy(m^4) | 611602 | 515445.18 | 493974.79 | 489827.34 | 474484.81 |
| BMy (m) | 28.29 | 31.51 | 32.73 | 38.54 | 32.78 |

Table IV above presents the simulation calculation results of Experimental Examples 15 to 18 and the comparative example in which the column does not have an expansion section. The columns of Experimental Example 15 and Experimental Example 16 expand upward from 16m underwater (i.e., the upper edge of the bottom connection portion) at 10 degrees and 15 degrees respectively. The side length of the bottom pentagon of the large column of Experimental Example 15 is 8.6m, the side length of the top pentagon is 11.4m, while the side length of the bottom pentagon of the small column is 7.7m, the side length of the top pentagon is 10.5m, and the horizontal cross-sectional areas of the large and small columns at sea level are 224.4m² and 190.4m² respectively. At this time, in order to obtain a reasonable GM value, the maximum distance between column edges needs to be 85.6m, and the overall weight is 3264.5 tons. In Experimental Example 16, the side lengths of the bottom pentagons of the large and small columns are 8.6m and 7.8m respectively, the side lengths of the top pentagons are 12.9m and 12.1m respectively, and the horizontal cross-sectional areas of the large and small columns at sea level are 286.3m² and 251.9m² respectively, which are significantly larger than Experimental Example 15. At this time, in order to obtain a reasonable GM value, the maximum distance between column edges can be reduced to 73.6m, and the overall weight is reduced to 2948.9 tons.

In Experimental Example 17, it expands outward from a water depth of 5m below the sea level at a 45-degree angle. The side lengths of the bottom pentagon of the large and small columns are 8m and 7m respectively, the side lengths of the top pentagon are 13m and 12m respectively, and the horizontal cross-sectional areas of the large and small columns at sea level are 290.8m² and 247.8m² respectively. At this time, in order to obtain a reasonable GM value, the maximum distance between column edges is 77m, and the overall weight is 2893.7 tons.

When the offshore floating wind turbine platform is first launched into the water, its stability is poor due to its shallow draft. The design of Experimental Example 18 can increase the stability at this time. At this time, the side lengths of the bottom pentagons of the large and small columns are 8m and 7m respectively, the side lengths of the top pentagons are 11.8m and 10.8m respectively, and the horizontal cross-sectional areas of the large and small columns at sea level are 239.6m² and 200.7m² respectively, which is significantly smaller than Experimental Examples 15, 16 and 17. At this time, in order to obtain a reasonable GM value, the maximum distance between column edges is 77.2m, and the overall weight is 2956.2 tons. From the above analysis, it can be seen that no matter how the column expands outward, the size and overall weight of the offshore floating wind turbine platform can be reduced.

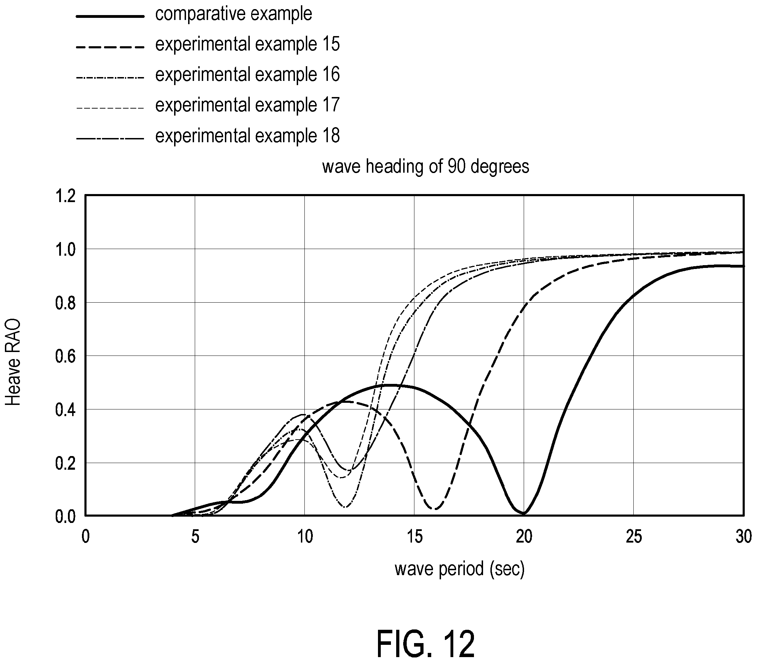

FIG. 12 shows the relationship between up and down motions and wave period for wave heading of 90 degrees for the offshore floating wind turbine platform of the comparative example and the embodiment of FIG. 8 to FIG. 11.

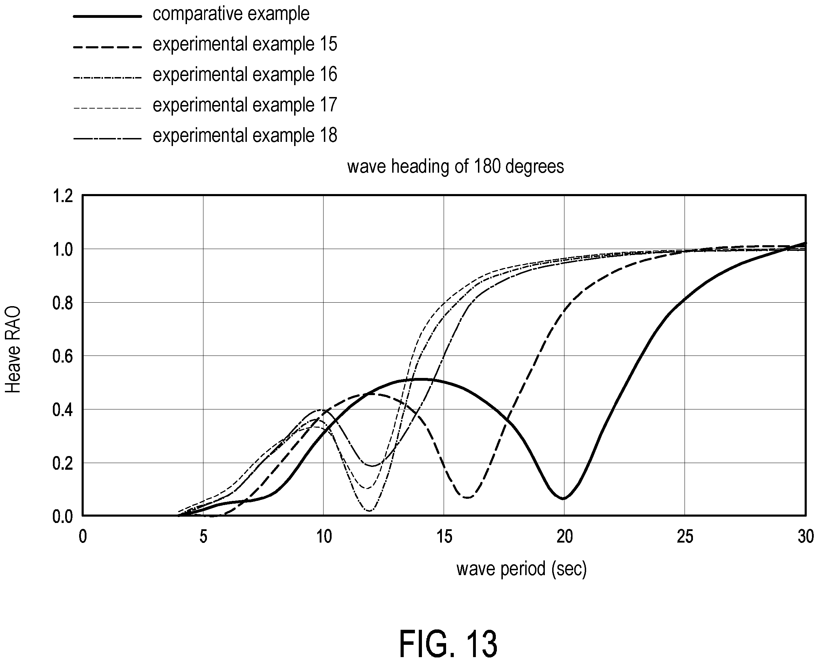

FIG. 13 shows the relationship between up and down motion and wave period for wave heading of 180 degrees for the offshore floating wind turbine platform of the comparative example and the embodiment of FIG. 8 to FIG. 11.

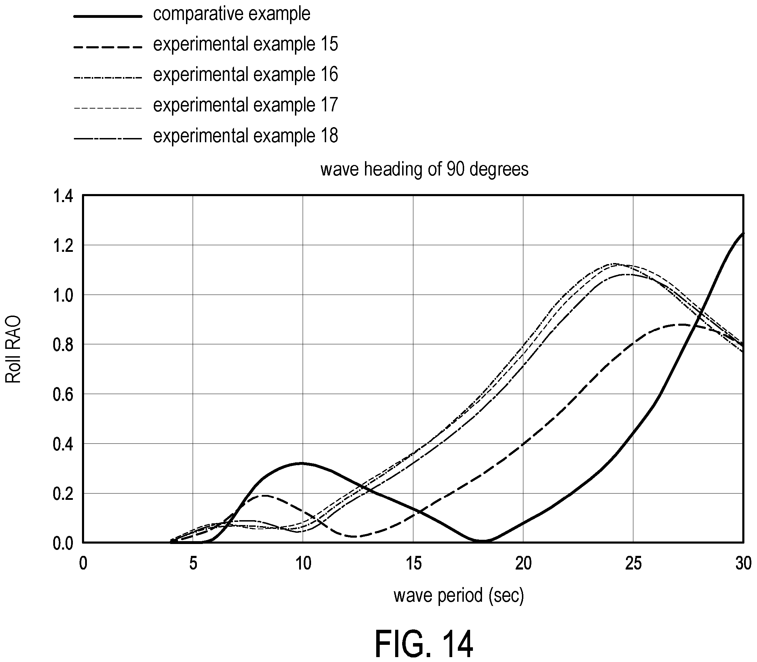

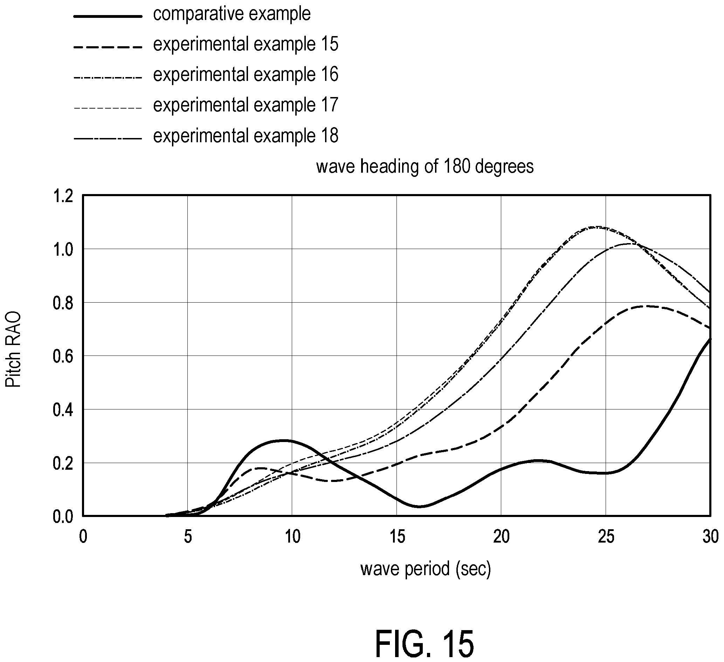

FIG. 14 shows the relationship between roll motion and wave period for wave heading of 90 degrees for the offshore floating wind turbine platform of the comparative example and the embodiment of FIG. 8 to FIG. 11. FIG. 15 shows the relationship between pitch motion and wave period for wave heading of 180 degrees for the offshore floating wind turbine platform of the comparative example and the embodiment of FIG. 8 to FIG. 11.

Taking the offshore floating wind turbine platform in FIG. 2 as an example, the wave direction coming from the large column 210 at the top side of the figure is defined as 0 degrees, the wave direction of the wave coming from the bottom side of the figure is defined as 180 degrees, the wave direction of the wave coming from the right side of the figure is defined as 90 degrees, and the wave direction of the wave coming from the left side of the figure is defined as - 90 degrees. Since the wave directions of 90 degrees and -90 degrees mainly generate roll motion, the pitch response is ignored here. Since the pitch motion is mainly generated when the wave direction is 0 degrees or 180 degrees, the roll response is ignored here. All calculations assume 20% of critical damping for all vertical motions. Generally speaking, a common method used to evaluate the sea-keeping performance of ships is to use the "Response Amplitude Operator" (RAO) for evaluation. In detail, Pitch RAO represents the longitudinal inclination movement of the hull under unit wave amplitude, and its unit is: degree/meter. The Roll RAO represents the lateral inclination movement of the hull under unit wave amplitude, and its unit is: degree/meter. Heave RAO represents the amount of up and down movement of the hull under unit wave amplitude, and its unit is: meter/meter (wave height).

The main wave period on the west coast of Taiwan in winter is about 6 to 7.5 seconds. From FIG. 12 to FIG. 15, it can be clearly seen that the amount of roll and pitch movement of the comparative example during winter operation is much higher than that of experimental examples 16, 17, and 18. This amount of movement, especially pitch, will significantly affect the power generation of the wind turbine and the inertia force it experiences. Small movement response will reduce the failure rate of the wind turbine.

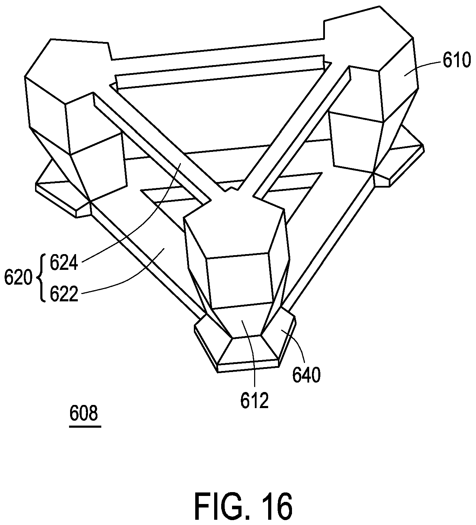

FIG. 16 is a schematic view of an offshore floating wind turbine platform according to another embodiment of the disclosure. Referring to FIG. 16, an offshore floating wind turbine platform 608 of this embodiment is roughly similar to the offshore floating wind turbine platform 604 of FIG. 9. The main difference is that the offshore floating wind turbine platform 608 of this embodiment further includes at least one damping plate 640. The damping plate 640 extends outward from the bottom connection portion 622. The damping plate 640 can increase the damping in the up and down motion, thereby reducing the up and down movement of the offshore floating wind turbine platform 608. The damping plate 640 can also increase the damping of the roll and pitch motions, so that their motion amounts are relatively reduced. After the movement of the offshore floating wind turbine platform 608 in the waves decreases, the unsteady inertia force experienced by the wind turbine during the power generation process will also decrease relatively, which can reduce the failure rate of the wind turbine.

To sum up, in the offshore floating wind turbine platform of the disclosure, the horizontal cross-sectional area of the expansion section of the column gradually increases upward, so the height of the metacenter may be increased, and the distance between the center of gravity and the metacenter also increases. In this way, it is not necessary to apply a lot of ballasts to the offshore floating turbine platform, which can reduce the total displaced volume V of the offshore floating wind turbine platform, thereby further increasing BM. In addition, due to the increased BM, the overall volume of the platform may also be reduced. Ultimately, the size of the entire offshore floating wind turbine platform may be reduced, and the weight of the entire offshore floating wind turbine platform may be significantly reduced, making the offshore floating wind turbine platform easier for to manufacturing and more economical.

## Claims

1. An offshore floating wind turbine platform (100, 200, 300, 400, 500) for a wind turbine (50) to be disposed on the offshore floating wind turbine platform (100, 200, 300, 400, 500) and floated on the sea, wherein the offshore floating wind turbine platform (100, 200, 300, 400, 500) comprises:
a plurality of columns (110, 210, 310), wherein at least one of the columns (110, 210, 310) has an expansion section (112, 212, 312, 512), a horizontal cross-sectional area (A10) of the expansion section (112, 212, 312, 512) gradually increases upward, the wind turbine (50) is disposed on one of the columns (110, 210, 310), and a design waterline of the offshore floating wind turbine platform (100, 200, 300, 400, 500) is located on the expansion sections (112, 212, 312, 512); and
a connection portion (120, 220), connecting the columns (110, 210, 310).

2. The offshore floating wind turbine platform (100, 200, 300, 400, 500) according to claim 1, wherein an expansion angle of the expansion section (112, 212, 312, 512) is between 5 degrees and 80 degrees.

3. The offshore floating wind turbine platform (100, 200, 300, 400, 500) according to claim 1, wherein an expansion angle of the expansion section (112, 212, 312, 512) is between 18.4 degrees and 60 degrees.

4. The offshore floating wind turbine platform (100, 200, 300, 400, 500) according to claim 1, wherein the expansion section (112, 212, 312, 512) is tapered.

5. The offshore floating wind turbine platform (100, 200, 300, 400, 500) according to claim 1, wherein the column (110, 210, 310) having the expansion section (112, 212, 312, 512) further has an upper section (114, 214, 314, 514) and a lower section (116, 216, 316, 516), the expansion section (112, 212, 312, 512) is connected between the upper section (114, 214, 314, 514) and the lower section (116, 216, 316, 516), and a horizontal cross-sectional area (A10) of the lower section (116, 216, 316, 516) is fixed.

6. The offshore floating wind turbine platform (100, 200, 300, 400, 500) according to claim 5, wherein the design waterline of the offshore floating wind turbine platform (100, 200, 300, 400, 500) is located at a level where the expansion section (112, 212, 312, 512) connects to the upper section (114, 214, 314, 514).

7. The offshore floating wind turbine platform (100, 200, 300, 400, 500) according to claim 5, wherein a central axis (314A, 316A) of the upper section (114, 214, 314, 514) overlaps a central axis (314A, 316A) of the lower section (116, 216, 316, 516).

8. The offshore floating wind turbine platform (100, 200, 300, 400, 500) according to claim 5, wherein a central axis (314A, 316A) of the upper section (114, 214, 314, 514) is parallel to a central axis (314A, 316A) of the lower section (116, 216, 316, 516), and the central axis (314A, 316A) of the upper section (114, 214, 314, 514) is farther from a center of the offshore floating wind turbine platform (100, 200, 300, 400, 500) than the central axis (314A, 316A) of the lower section (116, 216, 316, 516).

9. The offshore floating wind turbine platform (100, 200, 300, 400, 500) according to claim 5 further comprising at least one buoyancy ring (430) detachably sleeved outside the lower section (116, 216, 316, 516) and the expansion section (112, 212, 312, 512).

10. The offshore floating wind turbine platform (100, 200, 300, 400, 500) according to claim 1, wherein the column (110, 210, 310) having the expansion section (112, 212, 312, 512) further has an upper section (114, 214, 314, 514), the expansion section (112, 212, 312, 512) is connected between the upper section (114, 214, 314, 514) and the connection portion (120, 220), and a horizontal cross-sectional area (A10) of the upper section (114, 214, 314, 514) is fixed.

11. The offshore floating wind turbine platform (100, 200, 300, 400, 500) according to claim 10, wherein a design waterline of the offshore floating wind turbine platform (100, 200, 300, 400, 500) is located at a level where the expansion section (112, 212, 312, 512) connects to the upper section (114, 214, 314, 514).

12. The offshore floating wind turbine platform (100, 200, 300, 400, 500) according to claim 1, further comprising at least one damping plate, wherein the connection portion (120, 220) includes a bottom connection portion (222) and a top connection portion (224), the bottom connection portion (222) is connected to bottoms of the columns (110, 210, 310), the top connection portion (224) is connected to tops of the columns (110, 210, 310), the damping plate extends outward from the bottom connection portion (222).
